# EUROPEAN PATENT APPLICATION

(11) **EP 4 016 015 A1**
(43) Date of publication of application: **22.06.2022**
(21) Application number: 20852517.0
(22) Date of filing: 21.07.2020
(51) Int. Cl.: G01H 9/00, G08B 21/02

(54) **OPTICAL FIBER SENSING SYSTEM, OPTICAL FIBER SENSING DEVICE, AND RESCUE REQUEST DETECTION METHOD**

(30) Priority: 13.08.2019 JP 2019148296
(71) Applicant: NEC Corporation, 108-8001 Tokyo (JP)
(72) Inventor: YODA, Yukihide, Tokyo 108-8001 (JP); OGURA, Naoto, Tokyo 108-8001 (JP); AONO, Yoshiaki, Tokyo 108-8001 (JP)
(74) Representative: Reeve, Nicholas Edward
(86) International application number: PCT/JP2020/028327
(87) International publication number: WO 2021/029196

(57) **Abstract**

An optical fiber sensing system according to the present disclosure comprises an optical fiber (10), a reception unit (21) configured to receive, from the optical fiber (10), an optical signal including a vibration pattern, and a detection unit (22) configured to detect occurrence of a rescue request based on the vibration pattern included in the optical signal.

## Description

### Technical Field

The present disclosure relates to an optical fiber sensing system, optical fiber sensing equipment, and a rescue request detection method.

### Background Art

Recently, a technology for detecting the occurrence of a disaster or the damage caused by a disaster by using an optical fiber as a sensor has been developed. For example, Patent Literature 1 discloses a technique that enables remotely monitoring the state of a structure (infrastructure) in the event of a disaster or other emergency when an optical fiber is laid on/in the structure and is used to sense a change in the state of the structure.

### Citation List

### Patent Literature

Patent Literature 1: Japanese Unexamined Patent Application Publication No. 2001-249035

### Summary of Invention

### Technical Problem

Although it is important to detect the damage of a structure as can be conducted by the technology disclosed in Patent Literature 1 in the event of a disaster, it is also important to detect the damage of victims. In particular, when there is a person in need of rescue, it is necessary to detect the person in need of rescue immediately and head for rescue.

Therefore, an objective of the present disclosure is to solve the above-mentioned problem and to provide an optical fiber sensing system, optical fiber sensing equipment, and a rescue request detection method that can quickly detect a person in need of rescue in the event of a disaster.

### Solution to Problem

An optical fiber sensing system according to an aspect comprises:
an optical fiber;
a reception unit configured to receive, from the optical fiber, an optical signal including a vibration pattern; and
a detection unit configured to detect occurrence of a rescue request based on the vibration pattern included in the optical signal.

An optical fiber sensing equipment according to an aspect comprises:
a reception unit configured to receive, from an optical fiber, an optical signal including a vibration pattern; and
a detection unit configured to detect occurrence of a rescue request based on the vibration pattern included in the optical signal.

A rescue request detection method according to an aspect is a rescue request detection method using an optical fiber sensing system, and the method includes:
a reception step for receiving an optical signal including a vibration pattern from an optical fiber; and
a detection step for detecting occurrence of a rescue request based on the vibration pattern included in the optical signal.

### Advantageous Effects of Invention

The above-described aspects offer the effect of providing an optical fiber sensing system, optical fiber sensing equipment and a rescue request detection method that can quickly detect a person in need of rescue in the event of a disaster.

### Brief Description of Drawings

Fig. 1 is a diagram illustrating a configuration example of an optical fiber sensing system according to a first example embodiment;
Fig. 2 is a diagram illustrating a specific configuration example of the optical fiber sensing system according to the first example embodiment;
Fig. 3 is a diagram illustrating an example of a poster posted on utility poles illustrated in Fig. 2;
Fig. 4 is a diagram illustrating a specific configuration example of the optical fiber sensing system according to the first example embodiment;
Fig. 5 is a diagram illustrating a specific configuration example of the optical fiber sensing system according to the first example embodiment;
Fig. 6 is a flowchart illustrating an operation example of the optical fiber sensing system according to the first example embodiment;
Fig. 7 is a diagram illustrating a configuration example of an optical fiber sensing system according to a second example embodiment;
Fig. 8 is a flowchart illustrating an operation example of the optical fiber sensing system according to the second example embodiment;
Fig. 9 is a diagram illustrating an example of a correspondence table stored in a detection unit according to a third example embodiment;
Fig. 10 is a diagram illustrating an example of a GUI screen used for notification by a notification unit according to the third example embodiment;
Fig. 11 is a flowchart illustrating an operation example of the optical fiber sensing system according to the third example embodiment; and
Fig. 12 is a block diagram illustrating an example of a hardware configuration of a computer that realizes the optical fiber sensing equipment according to the example embodiments.

### Description of Embodiments

The following will describe example embodiments of the present disclosure with reference to the drawings. Note that the following descriptions and drawings have been abbreviated and simplified as appropriate for clarity of explanation. Further, in each of the following drawings, the same elements are designated by the same reference numerals, and duplicate explanations are omitted where necessary.

### <First Embodiment>

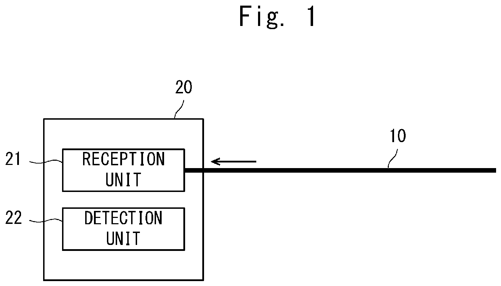

First, the following will describe a configuration example of an optical fiber sensing system according to a first example embodiment with reference to Fig. 1.

As illustrated in Fig. 1, the optical fiber sensing system according to the first example embodiment comprises an optical fiber 10 and optical fiber sensing equipment 20. Further, the optical fiber sensing equipment 20 comprises a reception unit 21 and a detection unit 22.

The optical fiber 10 is laid on/in an arbitrary object, and one end thereof is connected to the optical fiber sensing equipment 20. Note that an existing optical fiber that is already laid on/in the object may be used as the optical fiber 10, or the optical fiber 10 may be newly laid on/in the object. There may be one or a plurality of optical fibers 10.

The reception unit 21 injects pulsed light into the optical fiber 10. The reception unit 21 also receives the reflected or scattered light, which is generated as the pulsed light is transmitted through the optical fiber 10, as return light (an optical signal) via the optical fiber 10.

When vibration occurs in the object where the optical fiber 10 is laid, the vibration is transmitted to the optical fiber 10 and changes the wavelength of the return light transmitted through the optical fiber 10. In this way, the optical fiber 10 can detect vibration occurred in the object. Further, since the wavelength of the return light transmitted through the optical fiber 10 changes according to the vibration occurred in the object, the return light includes a vibration pattern corresponding to the vibration occurred in the object. This vibration pattern is a unique pattern in which the strength of vibration, the position of vibration, the transition of fluctuations in frequency, and the like are different.

Therefore, the detection unit 22 can determine whether or not a vibration pattern included in return light is a specific vibration pattern by analyzing a dynamic change in the vibration pattern included in the return light received by the reception unit 21.

Thus, in the first example embodiment, the vibration pattern of vibration that occurs when a person in need of rescue or a person accompanying the person in need of rescue makes a rescue request in the event of a disaster or other emergency is defined, and the detection unit 22 detects the occurrence of a rescue request based on a vibration pattern included in return light received by the reception unit 21.

More specifically, the detection unit 22 determines whether or not the vibration pattern included in the return light received by the reception unit 21 includes a vibration pattern of vibration that is generated when a person in need of rescue or an accompanying person requests rescue, and detects the occurrence of the rescue request based on the determination result.

The following will describe examples of how the detection unit 22 detects the occurrence of a rescue request based on a vibration pattern included in the return light received by the reception unit 21.

### (A1) Method A1

First, method A1 will be described.

In method A1, the detection unit 22 determines that a rescue request has occurred when the vibration pattern included in the return light received by the reception unit 21 includes a vibration pattern with a specific rhythm (beat).

The vibration of a specific rhythm is, for example, a series of sounds that do not occur in normal conditions. Alternatively, the vibration of a specific rhythm is a vibrating sound with a predetermined rhythm. The predetermined rhythm is, for example, a rhythm of 3-3-7 beats, a rhythm of a certain number of beats within a certain time period, or the like.

Further, in method A1, the detection unit 22 may use pattern matching.

For example, the detection unit 22 stores in advance a vibration pattern with a specific rhythm as a matching pattern. There may be a plurality of matching patterns. The detection unit 22 compares a vibration pattern included in return light with the matching pattern stored in advance. When the vibration pattern included in the return light includes any of the matching patterns stored in advance, the detection unit 22 determines that the vibration pattern included in the return light includes a vibration pattern with a specific rhythm, and determines that a rescue request has occurred.

### (A2) Method A2

Next, method A2 will be described.

In method A2, the detection unit 22 determines that a rescue request has occurred when the vibration pattern included in the return light received by the reception unit 21 includes a vibration pattern corresponding to a voice that requests rescue (for example, a voice such as "Help" or a scream sound such as "Kjaer").

The vibration pattern included in the return light received by the reception unit 21 includes a vibration pattern of vibration caused by a voice generated in or around the object.

Thus, the detection unit 22 can recognize the voice generated in or around the object by analyzing a dynamic change in the vibration pattern included in the return light.

As such, for example, the detection unit 22 stores in advance a list of voice words (for example, voice words such as "Help" and "Kjaer") that may be used when a person in need of rescue or an accompanying person makes a rescue request. A plurality of voice words may be stored. The detection unit 22 performs speech recognition based on the vibration pattern included in the return light and compares the recognized voice with the voice words stored in advance. When the recognized voice includes any of the voice words stored in advance, the detection unit 22 determines that the vibration pattern included in the return light includes a vibration pattern corresponding to the voice that requests rescue, and determines that a rescue request has occurred.

Note that the detection unit 22 may detect a vibration pattern corresponding to a scream sound such as "Kjaer" using pattern matching. In such a case, the detection unit 22 may store the vibration pattern of the scream sound in advance as a matching pattern, and determine whether or not the vibration pattern included in the return light includes the vibration pattern corresponding to the scream sound in a similar manner to above-described method A1.

The following will describe specific configuration examples that realize the first example embodiment.

### (B1) Configuration B1

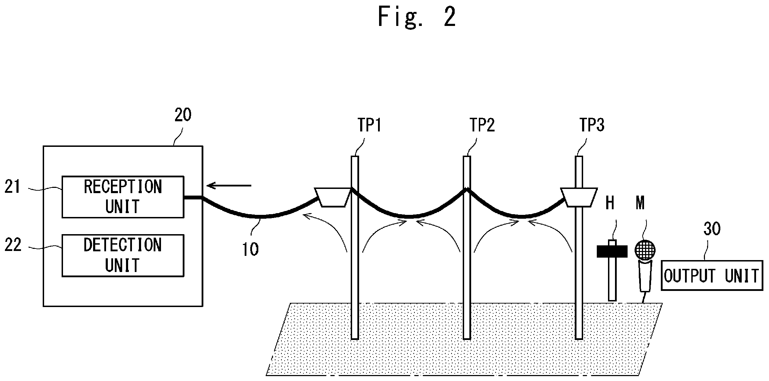

First, configuration B1 will be described with reference to Fig. 2.

As illustrated in Fig. 2, configuration B1 is an example of using an existing optical fiber that is already laid on utility poles TP1 to TP3 as the optical fiber 10. In the example of Fig. 2, the utility poles TP1 to TP3 are the objects. Hereinafter, the utility pole TP is referred to when any of the telephone poles TP1 to TP3 are not specified.

To realize method A1 described above, each of the utility poles TP1 to TP3 may be equipped with an item such as a hammer H to strike the utility pole TP in a specific rhythm when a person in need of rescue or an accompanying person makes a rescue request in the event of a disaster or other emergency.

However, in order for the person in need of rescue or accompanying person to strike the utility pole TP in a specific rhythm, the person in need of rescue or accompanying person must know the specific rhythm.

For this purpose, the specific rhythm may be made known to residents on a regional basis.

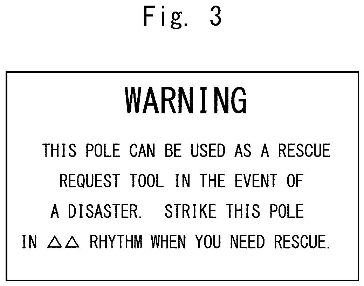

Alternatively, as illustrated in Fig. 3, a poster may be posted for notifying the specific rhythm on each of the utility poles TP1 to TP3.

To realize method A2 described above, each of the utility poles TP1 to TP3 may be equipped with a microphone M or other sound input units for inputting a voice of a person in need of rescue or an accompanying person who requests rescue in the event of a disaster or other emergency.

Further, an output unit 30 may be installed on each of the utility poles TP1 to TP3 for notifying a person in need of rescue or an accompanying person that the rescue request has been accepted. The output unit 30 may be realized by a Light Emitting Diode (LED) lamp that notifies that the rescue request has been accepted by being lit or flashing, a display that notifies on the screen, a speaker that notifies by voice, or the like.

Note that configuration B1 is an example of using an existing optical fiber already laid on the utility poles TP1 to TP3 as the optical fiber 10 without limitation. The optical fiber 10 may utilize an existing optical fiber already laid on another object. The other object is, for example, a bridge, a tunnel, or a road.

### (B2) Configuration B2

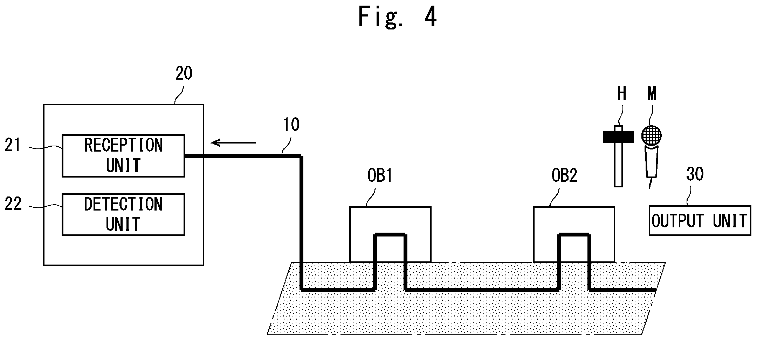

Next, configuration B2 will be described with reference to Fig. 4.

As illustrated in Fig. 4, configuration B2 is an example of laying a new optical fiber 10. In the example of Fig. 4, an optical fiber 10 is newly laid in objects OB1 and OB2. Hereinafter, the object OB is referred to when any of the objects OB1 and OB2 are not specified.

As in configuration B1 described above, each of the objects OB1 and OB2 may be equipped with a hammer H for striking the object OB in a specific rhythm, a microphone M for inputting a voice that requests rescue, and an output unit 30 for notifying that a rescue request has been accepted. Note that the method of how the person in need of rescue or accompanying person knows the specific rhythm may be similar to the method described in above-described configuration B1.

Note that the objects OB1 and OB2 may be any objects as long as the objects OB1 and OB2 are used by a person in need of rescue or an accompanying person to make a rescue request in the event of a disaster as described above. Therefore, the objects OB1 and OB2 are preferably objects where a person in need of rescue or an accompanying person may be headed in the event of a disaster, and preferably, for example, an evacuation map display plate, a telephone box, or the like.

### (B3) Configuration B3

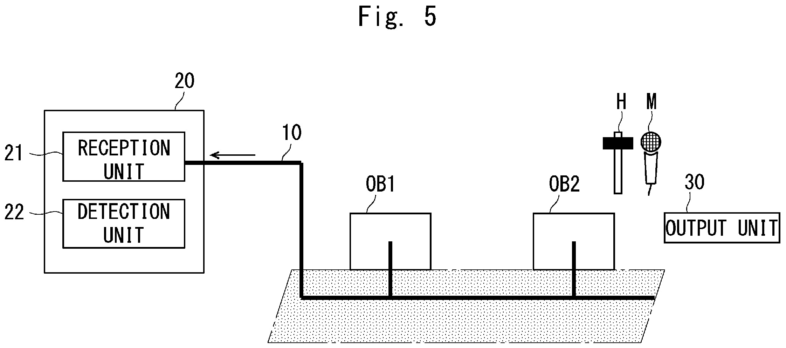

Next, configuration B3 will be described with reference to Fig. 5.

Above-described configuration B2 was an example of laying one optical fiber 10 in the objects OB1 and OB2.

On the other hand, as illustrated in Fig. 5, configuration B3 is an example of laying two optical fibers 10 branched from one optical fiber 10 in the objects OB1 and OB2, respectively.

Note that the other configuration of configuration B3 is similar to that of above-described configuration B2.

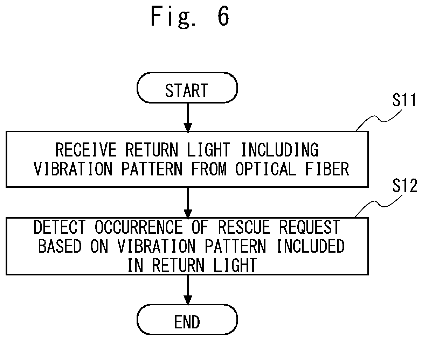

The following will describe an operation example of the optical fiber sensing system according to the first example embodiment with reference to Fig. 6.

As illustrated in Fig. 6, the reception unit 21 receives return light including a vibration pattern from the optical fiber 10 (step S11).

Next, the detection unit 22 detects the occurrence of a rescue request based on the vibration pattern included in the return light received by the reception unit 21 (step S12). This detection may be performed, for example, using any of methods A1 and A2 described above.

As described above, according to the first example embodiment, the reception unit 21 receives return light including a vibration pattern from the optical fiber 10. The detection unit 22 detects the occurrence of a rescue request based on the vibration pattern included in the return light received by the reception unit 21. In this way, a person in need of rescue can be quickly detected in the event of a disaster.

At this time, the detection unit 22 determines that a rescue request has occurred when the vibration pattern included in the return light includes a vibration pattern of a specific rhythm or a vibration pattern corresponding to a voice that requests rescue. In this way, in the event of a disaster, the person in need of rescue or accompanying person can request rescue by an easy method such as striking the optical fiber 10 or another object or the like on which the optical fiber 10 is laid in a specific rhythm, or uttering a voice that requests rescue.

### <Second Embodiment>

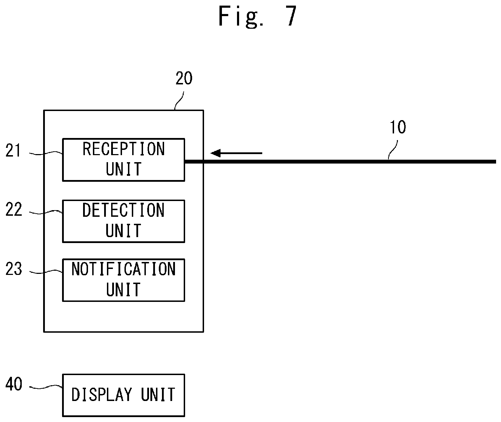

The following will describe a configuration example of an optical fiber sensing system according to a second example embodiment with reference to Fig. 7.

As illustrated in Fig. 7, the optical fiber sensing system according to the second example embodiment differs from the configuration of the first example embodiment described above in that a display unit 40 is additionally supplied and a notification unit 23 is additionally supplied to the optical fiber sensing equipment 20.

When the detection unit 22 determines that a rescue request has occurred, the notification unit 23 notifies a notification destination that the rescue request has occurred. The notification destination is, for example, a local government, a fire station, an emergency center, and/or a monitoring center without limitation. Further, the notification method may be, for example, a method of displaying a Graphical User Interface (GUI) screen on the display unit 40, such as a display or a monitor of the notification destination. Alternatively, the notification method may be a method of outputting a voice message from a speaker (not illustrated) of the notification destination.

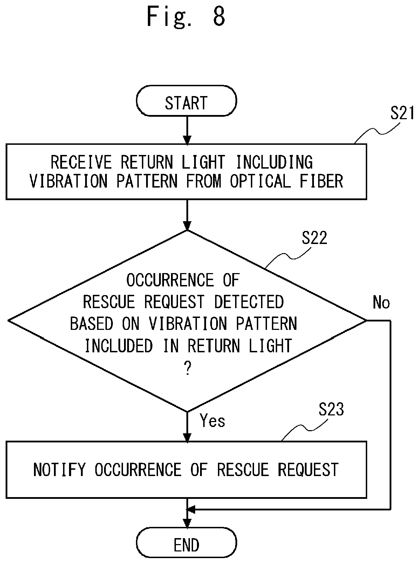

The following will describe an operation example of the optical fiber sensing system according to the second example embodiment with reference to Fig. 8.

As illustrated in Fig. 8, just as steps S11 to S12 of Fig. 6, the reception unit 21 receives return light including a vibration pattern from the optical fiber 10 (step S21), and then the detection unit 22 detects the occurrence of a rescue request based on the vibration pattern included in the return light received by the reception unit 21 (step S22).

When the detection unit 22 determines that a rescue request has occurred at step S22 (Yes at step S22), the notification unit 23 notifies a notification destination that the rescue request has occurred (step S23). For example, as described above, this notification may be performed by a method of displaying the fact that the rescue request has occurred on the screen or outputting it by voice.

As described above, according to the second example embodiment, when the detection unit 22 determines that a rescue request has occurred, the notification unit 23 notifies a notification destination that the rescue request has occurred. In this way, the notification destination can be notified of the occurrence of a rescue request.

The other effects are similar to those of the first example embodiment described above.

### <Third Embodiment>

An optical fiber sensing system according to a third example embodiment has a similar configuration to the above-described second example embodiment, with extended functions of the detection unit 22 and the notification unit 23.

When the detection unit 22 determines that a rescue request has occurred, the detection unit 22 identifies a location where the rescue request has occurred based on the return light received by the reception unit 21.

For example, the detection unit 22 identifies the distance of the optical fiber 10 from the reception unit 21 (optical fiber sensing equipment 20) to the position where the rescue request has occurred based on the time difference between the time when the reception unit 21 injected pulsed light in the optical fiber 10 and the time when the reception unit 21 received the return light including the corresponding vibration pattern (for example, a vibration pattern of a specific rhythm or a vibration pattern corresponding to a voice that requests rescue).

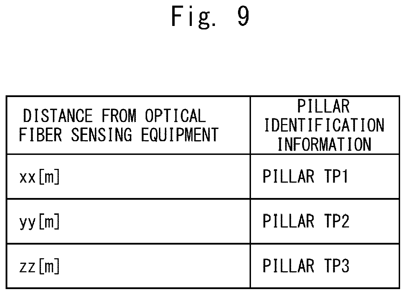

In addition, the detection unit 22 stores in advance a correspondence table that associates a distance of the optical fiber 10 from the reception unit 21 with a location corresponding to the distance. Fig. 9 illustrates an example of the correspondence table when the optical fiber 10 is laid on the utility poles TP1 to TP3 as illustrated in Fig. 2. In the example of Fig. 9, the correspondence table associates a distance of the optical fiber 10 from the reception unit 21 with the identification information of the utility pole TP installed at the position corresponding to the distance. For example, when the distance of the optical fiber 10 from the reception unit 21 to the position where the rescue has request occurred is xx [m], the detection unit 22 determines that the location where the rescue request has occurred is the utility pole TP1.

Note that the method of identifying the distance of the optical fiber 10 from the reception unit 21 (the optical fiber sensing equipment 20) to the position where the rescue request has occurred is not limited to the above-described method.

For example, the detection unit 22 compares, for each distance of the optical fiber 10 from the reception unit 21, the vibration intensity of the corresponding vibration pattern that occurred at the distance. Then, the detection unit 22 may identify the position at a distance where the vibration intensity is the largest as the position where the rescue request has occurred.

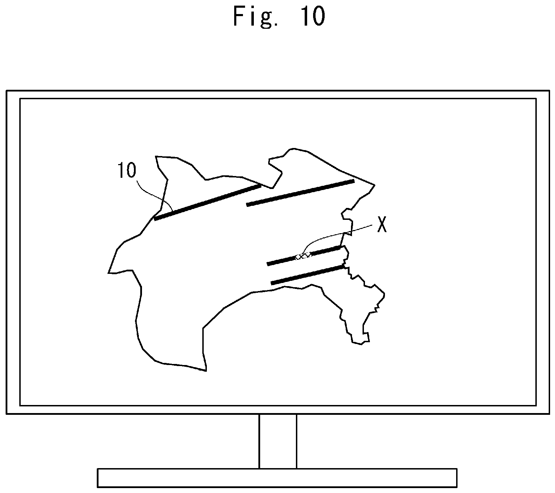

When the detection unit 22 determines that a rescue request has occurred, the notification unit 23 notifies a notification destination that the rescue request has occurred. Here, the notification unit 23 may store information indicating the location where the optical fiber 10 is laid and map information in association with each other. Then, when the detection unit 22 determines that a rescue request has occurred, the notification unit 23 may map and display the location where the rescue request has occurred on a map displayed by the display unit 40. Fig. 10 illustrates an example of a GUI screen that maps and displays a location where a rescue request has occurred on a map. In the example of Fig. 10, the position where the optical fiber 10 is laid, as well as, the location X where the rescue request has occurred are mapped and displayed on the map. Note that, when rescue requests occurred at a plurality of locations, the plurality of locations where the rescue requests occurred may be mapped and displayed on the map. In addition, the map illustrated in Fig. 10 can be enlarged or reduced as needed.

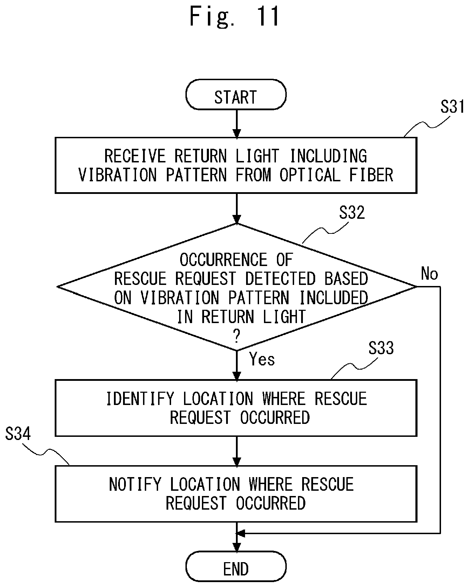

The following will describe an operation example of the optical fiber sensing system according to the third example embodiment with reference to Fig. 11.

As illustrated in Fig. 11, first, steps S31 to S32, which are similar to steps S21 to S22 in Fig. 8, are performed.

When the detection unit 22 determines that a rescue request has occurred at step S32 (Yes at step S32), the detection unit 22 subsequently identifies the location where the rescue request has occurred based on the return light received by the reception unit 21 (step S33). This identification may be performed by using, for example, the method using the correspondence table described above.

Subsequently, the notification unit 23 notifies a notification destination of the location where the rescue request has occurred (step S34). This notification may be performed using, for example, the GUI screen illustrated in Fig. 10 described above.

Note that the notification unit 23 may determine the notification destination according to the location and timing of the occurrence of the rescue request.

For example, the notification unit 23 may determine a local government or the like that is close to the location where the rescue request has occurred or has jurisdiction over the location as the notification destination.

In addition, there may be a shortage of manpower when a rescue request is made depending on the notification destination. Thus, the notification unit 23 stores in advance the priority of notification destinations for each time zone. For example, if there is a notification destination that has less manpower in an evening time zone, the notification destination is set to have a low priority in the evening time zone. Then, the notification unit 23 may determine a notification destination having the highest priority at the time when a rescue request is made.

As described above, according to the third example embodiment, when the detection unit 22 determines that a rescue request has occurred, the detection unit 22 identifies the location where the rescue request has occurred based on the return light, and the notification unit 23 notifies a notification destination of the location where the rescue request has occurred. In this way, the notification destination can be notified of the location of the occurrence of a rescue request, as well as, the occurrence of the rescue request.

The other effects are similar to those of the first example embodiment described above.

### <Other Embodiments>

In the third example embodiment described above, the notification unit 23 maps and displays the location where a rescue request has occurred on a map. From this display, the positions (distribution) where persons in need of rescue exist can be identified, which also enables to identify the damage of the disaster. Note that the damage of the disaster may be identified either by the detection unit 22 or by the notification unit 23.

Although the optical fiber sensing equipment 20 is provided with a plurality of components (the reception unit 21, the detection unit 22, and the notification unit 23) in the above-described example embodiments, the present disclosure is not limited thereto. The components provided in the optical fiber sensing equipment 20 are not limited to be provided in one device, and may be distributed over a plurality of devices.

### <Hardware Configuration of Optical Fiber Sensing Equipment>

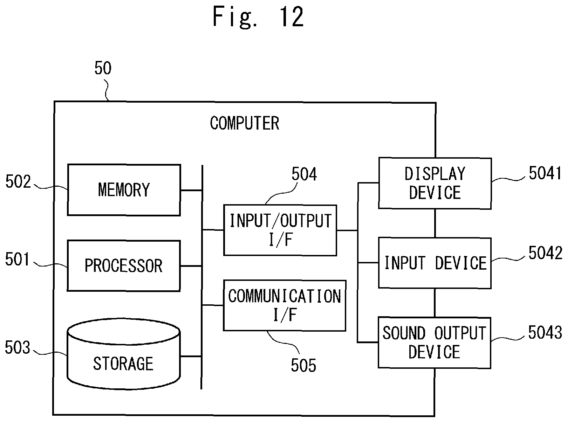

The following will describe the hardware configuration of a computer 50 that realizes the optical fiber sensing equipment 20 with reference to Fig. 12.

As illustrated in Fig. 12, the computer 50 comprises a processor 501, a memory 502, a storage 503, an input/output interface (input/output I/F) 504, a communication interface (communication I/F) 505 and the like. The processor 501, the memory 502, the storage 503, the input/output interface 504, and the communication interface 505 are connected through a data transmission line for transmitting and receiving data to and from one another.

The processor 501 is, for example, an arithmetic processing unit such as a Central Processing Unit (CPU) and a Graphics Processing Unit (GPU). The memory 502 is, for example, a memory such as a Random Access Memory (RAM) and a Read Only Memory (ROM). The storage 503 is, for example, a storage device such as a Hard Disk Drive (HDD), a Solid State Drive (SSD), and a memory card. Alternatively, the storage 503 may be a memory such as a RAM and a ROM.

The storage 503 stores programs that realize the functions of the components (the reception unit 21, the detection unit 22, and the notification unit 23) provided in the optical fiber sensing equipment 20. The processor 501 realizes the functions of the components provided in the optical fiber sensing equipment 20 by executing these programs. Here, when executing each of the above programs, the processor 501 may load the program on the memory 502 and then execute the program, or may execute the program without loading the program on the memory 502. The memory 502 and the storage 503 also play a role of storing information and data retained by the components provided in the optical fiber sensing equipment 20.

The above-described programs are stored using any of various types of non-transitory computer readable media and can be supplied to a computer (including the computer 50). The non-transitory computer readable media include various types of tangible storage media. Examples of the non-transitory computer readable media include magnetic recording media (for example, flexible discs, magnetic tapes, hard disk drives), magneto-optical recording media (for example, magneto-optical discs), Compact Disc-ROMs (CD-ROMs), CD-Recordables (CD-Rs), CD-ReWritables (CD-R/Ws), semiconductor memories (for example, mask ROMs, Programmable ROMs (PROMs), Erasable PROMs (EPROMs), flash ROMs, and RAMs. The programs may also be supplied to a computer through any of various types of transitory computer readable media. Examples of the transitory computer readable media include electrical, optical signals, and electromagnetic waves. The transitory computer readable media can supply the programs to the computer via a wired communication path, such as an electric wire and an optical fiber, or a wireless communication path.

The input/output interface 504 is connected to a display device 5041, an input device 5042, a sound output device 5043, and the like. The display device 5041 is a device that displays a screen corresponding to drawing data processed by the processor 501, such as a Liquid Crystal Display (LCD), a Cathode Ray Tube (CRT) display, and a monitor. The input device 5042 is a device that receives an operator's operation input, and is, for example, a keyboard, a mouse, a touch sensor, or the like. The display device 5041 and the input device 5042 may be integrated and realized as a touch panel. The sound output device 5043 is a device, such as a speaker, that acoustically outputs sound corresponding to acoustic data processed by the processor 501.

The communication interface 505 transmits/receives data to/from an external device. For example, the communication interface 505 communicates with an external device via a wired communication path or a wireless communication path.

Although the present disclosure has been described above with reference to the example embodiments, the present disclosure is not limited to the above-described example embodiments. Various changes that can be understood by those skilled in the art can be made to the structure and details of the present disclosure within the scope of the present disclosure.

For example, some or all of the above-described example embodiments may be used in combination.

In addition, some or all of the above-described example embodiments may also be described as in the following Supplementary Notes, but are not limited to the following.

### (Supplementary Note 1)

An optical fiber sensing system comprising:
an optical fiber;
a reception unit configured to receive, from the optical fiber, an optical signal including a vibration pattern; and
a detection unit configured to detect occurrence of a rescue request based on the vibration pattern included in the optical signal.

### (Supplementary Note 2)

The optical fiber sensing system according to Supplementary Note 1, wherein the detection unit determines that the rescue request has occurred when the vibration pattern included in the optical signal includes a vibration pattern with a specific beat.

### (Supplementary Note 3)

The optical fiber sensing system according to Supplementary Note 1, wherein the detection unit determines that the rescue request has occurred when the vibration pattern included in the optical signal includes a vibration pattern corresponding to a voice that requests rescue.

### (Supplementary Note 4)

The optical fiber sensing system according to any one of Supplementary Notes 1 to 3, further comprising a notification unit configured to, when the detection unit determines that the rescue request has occurred, notify a notification destination that the rescue request has occurred.

### (Supplementary Note 5)

The optical fiber sensing system according to Supplementary Note 4, wherein,
when the detection unit determines that the rescue request has occurred, the detection unit identifies a location where the rescue request has occurred based on the optical signal, and
when the detection unit determines that the rescue request has occurred, the notification unit determines the notification destination according to the location where the rescue request has occurred.

### (Supplementary Note 6)

The optical fiber sensing system according to Supplementary Note 5, further comprising a display unit,
wherein, when the detection unit determines that the rescue request has occurred, the notification unit maps and displays the location where the rescue request has occurred on a map that is displayed by the display unit.

### (Supplementary Note 7)

An optical fiber sensing equipment comprising:
a reception unit configured to receive, from an optical fiber, an optical signal including a vibration pattern; and
a detection unit configured to detect occurrence of a rescue request based on the vibration pattern included in the optical signal.

### (Supplementary Note 8)

The optical fiber sensing equipment according to Supplementary Note 7, wherein the detection unit determines that the rescue request has occurred when the vibration pattern included in the optical signal includes a vibration pattern with a specific beat.

### (Supplementary Note 9)

The optical fiber sensing equipment according to Supplementary Note 7, wherein the detection unit determines that the rescue request has occurred when the vibration pattern included in the optical signal includes a vibration pattern corresponding to a voice that requests rescue.

### (Supplementary Note 10)

The optical fiber sensing equipment according to any one of Supplementary Notes 7 to 9, further comprising a notification unit configured to, when the detection unit determines that the rescue request has occurred, notify a notification destination that the rescue request has occurred.

### (Supplementary Note 11)

The optical fiber sensing equipment according to Supplementary Note 10, wherein,
when the detection unit determines that the rescue request has occurred, the detection unit identifies a location where the rescue request has occurred based on the optical signal, and,
when the detection unit determines that the rescue request has occurred, the notification unit determines the notification destination according to the location where the rescue request has occurred.

### (Supplementary Note 12)

The optical fiber sensing equipment according to Supplementary Note 11, wherein, when the detection unit determines that the rescue request has occurred, the notification unit maps and displays the location where the rescue request has occurred on a map that is displayed by a display unit.

### (Supplementary Note 13)

A rescue request detection method using an optical fiber sensing system, the method including:
a reception step for receiving, from an optical fiber, an optical signal including a vibration pattern; and
a detection step for detecting occurrence of a rescue request based on the vibration pattern included in the optical signal.

### (Supplementary Note 14)

The rescue request detection method according to Supplementary Note 13, wherein the detection step determines that the rescue request has occurred when the vibration pattern included in the optical signal includes a vibration pattern with a specific beat.

### (Supplementary Note 15)

The rescue request detection method according to Supplementary Note 13, wherein the detection step determines that the rescue request has occurred when the vibration pattern included in the optical signal includes a vibration pattern corresponding to a voice that requests rescue.

### (Supplementary Note 16)

The rescue request detection method according to any one of Supplementary Notes 13 to 15, further including a notification step for, when it is determined that the rescue request has occurred at the detection step, notifying a notification destination that the rescue request has occurred.

### (Supplementary Note 17)

The rescue request detection method according to Supplementary Note 16, wherein,
when it is the determined that the rescue request has occurred at the detection step, the detection step identifies a location where the rescue request has occurred based on the optical signal, and,
when it is the determined that the rescue request has occurred at the detection step, the notification step determines the notification destination according to the location where the rescue request has occurred.

### (Supplementary Note 18)

The rescue request detection method according to Supplementary Note 17, wherein, when it is determined that the rescue request has occurred at the detection step, the notification step maps and displays the location where the rescue request has occurred on a map that is displayed by a display unit.

The present application claims the benefit of priority of Japanese Patent Application No. 2019-148296 filed on August 13, 2019, the entire contents of which are incorporated herein by reference.

### Reference Signs List

- 10: OPTICAL FIBER
- 20: OPTICAL FIBER SENSING EQUIPMENT
- 21: RECEPTION UNIT
- 22: DETECTION UNIT
- 23: NOTIFICATION UNIT
- 30: OUTPUT UNIT
- 40: DISPLAY UNIT
- 50: COMPUTER
- 501: PROCESSOR
- 502: MEMORY
- 503: STORAGE
- 504: INPUT/OUTPUT INTERFACE
- 5041: DISPLAY DEVICE
- 5042: INPUT DEVICE
- 5043: SOUND OUTPUT DEVICE
- 505: COMMUNICATION INTERFACE
- TP1 to TP3: UTILITY POLES
- OB1, OB2: OBJECTS
- H: HUMMER
- M: MICROPHONE

## Claims

1. An optical fiber sensing system comprising:
an optical fiber;
a reception unit configured to receive, from the optical fiber, an optical signal including a vibration pattern; and
a detection unit configured to detect occurrence of a rescue request based on the vibration pattern included in the optical signal.

2. The optical fiber sensing system according to Claim 1, wherein the detection unit determines that the rescue request has occurred when the vibration pattern included in the optical signal includes a vibration pattern with a specific beat.

3. The optical fiber sensing system according to Claim 1, wherein the detection unit determines that the rescue request has occurred when the vibration pattern included in the optical signal includes a vibration pattern corresponding to a voice that requests rescue.

4. The optical fiber sensing system according to any one of Claims 1 to 3, further comprising a notification unit configured to, when the detection unit determines that the rescue request has occurred, notify a notification destination that the rescue request has occurred.

5. The optical fiber sensing system according to Claim 4, wherein,
when the detection unit determines that the rescue request has occurred, the detection unit identifies a location where the rescue request has occurred based on the optical signal, and
when the detection unit determines that the rescue request has occurred, the notification unit determines the notification destination according to the location where the rescue request has occurred.

6. The optical fiber sensing system according to Claim 5, further comprising a display unit,
wherein, when the detection unit determines that the rescue request has occurred, the notification unit maps and displays the location where the rescue request has occurred on a map that is displayed by the display unit.

7. An optical fiber sensing equipment comprising:
a reception unit configured to receive, from an optical fiber, an optical signal including a vibration pattern; and
a detection unit configured to detect occurrence of a rescue request based on the vibration pattern included in the optical signal.

8. The optical fiber sensing equipment according to Claim 7, wherein the detection unit determines that the rescue request has occurred when the vibration pattern included in the optical signal includes a vibration pattern with a specific beat.

9. The optical fiber sensing equipment according to Claim 7, wherein the detection unit determines that the rescue request has occurred when the vibration pattern included in the optical signal includes a vibration pattern corresponding to a voice that requests rescue.

10. The optical fiber sensing equipment according to any one of Claims 7 to 9, further comprising a notification unit configured to, when the detection unit determines that the rescue request has occurred, notify a notification destination that the rescue request has occurred.

11. The optical fiber sensing equipment according to Claim 10, wherein,
when the detection unit determines that the rescue request has occurred, the detection unit identifies a location where the rescue request has occurred based on the optical signal, and,
when the detection unit determines that the rescue request has occurred, the notification unit determines the notification destination according to the location where the rescue request has occurred.

12. The optical fiber sensing equipment according to Claim 11, wherein, when the detection unit determines that the rescue request has occurred, the notification unit maps and displays the location where the rescue request has occurred on a map that is displayed by a display unit.

13. A rescue request detection method using an optical fiber sensing system, the method including:
a reception step for receiving, from an optical fiber, an optical signal including a vibration pattern; and
a detection step for detecting occurrence of a rescue request based on the vibration pattern included in the optical signal.

14. The rescue request detection method according to Claim 13, wherein the detection step determines that the rescue request has occurred when the vibration pattern included in the optical signal includes a vibration pattern with a specific beat.

15. The rescue request detection method according to Claim 13, wherein the detection step determines that the rescue request has occurred when the vibration pattern included in the optical signal includes a vibration pattern corresponding to a voice that requests rescue.

16. The rescue request detection method according to any one of Claims 13 to 15, further including a notification step for, when it is determined that the rescue request has occurred at the detection step, notifying a notification destination that the rescue request has occurred.

17. The rescue request detection method according to Claim 16, wherein,
when it is the determined that the rescue request has occurred at the detection step, the detection step identifies a location where the rescue request has occurred based on the optical signal, and,
when it is the determined that the rescue request has occurred at the detection step, the notification step determines the notification destination according to the location where the rescue request has occurred.

18. The rescue request detection method according to Claim 17, wherein, when it is determined that the rescue request has occurred at the detection step, the notification step maps and displays the location where the rescue request has occurred on a map that is displayed by a display unit.
